# EUROPÄISCHE PATENTSCHRIFT

(11) **EP 0 889 919 B1**
(45) Veröffentlichungstag und Bekanntmachung des Hinweises auf die Patenterteilung: **12.06.2002**
(21) Anmeldenummer: 97906187.6
(22) Anmeldetag: 07.03.1997
(51) Int. Cl.: C08G 18/10, C08G 18/62, C08G 18/42, C08G 18/72, C08G 18/08, C09D 175/04

(54) **WÄSSRIGES ZWEIKOMPONENTEN-POLYURETHAN-BESCHICHTUNGSMITTEL, VERFAHREN ZU SEINER HERSTELLUNG UND SEINE VERWENDUNG ALS DECKLACK ODER KLARLACK SOWIE SEINE VERWENDUNG ZUR BESCHICHTUNG VON KUNSTSTOFFEN**
AQUEOUS TWO-COMPONENT POLYURETHANE COATING AGENT, PROCESS FOR ITS PRODUCTION, ITS USE AS A FINISHING COATING MATERIAL OR CLEAR COATING MATERIAL, AND ITS USE FOR COATING PLASTICS
AGENT DE RECOUVREMENT POLYURETHANE A DEUX COMPOSANTS, AQUEUX, PROCEDE PERMETTANT DE LE PRODUIRE ET UTILISATION COMME VERNIS DE FINITION OU VERNIS CLAIR ET UTILISATION POUR RECOUVRIR DES MATIERES PLASTIQUES

(30) Priorität: 25.03.1996 DE 19611646
(43) Veröffentlichungstag der Anmeldung: 13.01.1999
(73) Patentinhaber: BASF Coatings Aktiengesellschaft, 48165 Münster (DE)
(72) Erfinder: HINTZE-BRÜNING, Horst, D-48165 Münster (DE); RINK, Heinz-Peter, D-48153 Münster (DE); NIENHAUS, Egbert, D-59387 Ascheberg (DE)
(74) Vertreter: Fitzner, Uwe, Dr.
(86) Internationale Anmeldenummer: EP9701164
(87) Internationale Veröffentlichungsnummer: WO9735898

(56) Entgegenhaltungen:
- EP-A- 0 634 431
- EP-A- 0 678 536
- DE-A- 4 226 270
- DE-A- 4 421 823
- DE-C- 3 805 629

## Beschreibung

Gegenstand der vorliegenden Erfindung ist ein wäßriges Zweikomponenten-Polyurethan-Beschichtungsmittel, enthaltend
I.) eine Komponente (I), die als Bindemittel (A)
   (A1) mindestens ein wasserlösliches oder wasserdispergierbares, Hydroxylgruppen und Säuregruppen, die in die entsprechenden Säureaniongruppen überführbar sind, enthaltendes Polyesterharz (A1) mit einer OH-Zahl von 30 bis 250 mgKOH/g und einer Säurezahl von 5 bis 150 mgKOH/g und
   (A2) mindestens ein wasserlösliches oder wasserdispergierbares, Hydroxylgruppen und Säuregruppen, die in die entsprechenden Säureaniongruppen überführbar sind, enthaltendes Polyurethanharz (A2) mit einer OH-Zahl von 20 bis 200 mg OH/g und einer Säurezahl von 5 bis 150 mg KOH/g, wobei das Polyurethanharz (A2) herstellbar ist, indem in einer ersten Reaktionsstufe
      (a) mindestens ein organisches Di- und/oder Polyisocyanat (a) mit
      (b) mindestens einer Verbindung (b), die mindestens eine gegenüber lsocyanatgruppen reaktive Gruppe und mindestens eine Gruppe, die die Wasserdispergierbarkeit gewährleistet, aufweist,
         zu einem Reaktionsprodukt mit freien Isocyanatgruppen umgesetzt werden, welches anschließend mit
      (c) einem Polykondensationsprodukt (c) aus
         (k1) 10 bis 45 Mol-% mindestens eines Diols,
         (k2) 5 bis 50 Mol-% mindestens eines Polyols mit mindestens 3 OH-Gruppen pro Molekül,
         (k3) 35 bis 47 Mol-% mindestens einer Di- und/oder Polycarbonsäure, ggf. zusammen mit einer Monocarbonsäure, und
         (k4) 0 bis 20 Mol-% mindestens eines Monools,
         wobei die Summe der Mol-%-Angaben der Komponenten (k1) bis (k4) jeweils 100 Mol-% beträgt und
      (d) 0 bis 20 Mol-%, bezogen auf die Komponente (c), mindestens einer weiteren Alkoholkomponente zu dem Polyurethanharz (A2) umgesetzt wird, wobei die Mengen der Komponenten (a) bis (d) so gewählt werden, daß das Polyurethanharz die gewünschten OH-Zahlen und Säurezahlen und ggf. die gewünschten Molekulargewichte aufweist und
   (A3) mindestens ein weiteres wasserlösliches oder wasserdispergierbares, Hydroxylgruppen und Säuregruppen, die in die entsprechenden Säureaniongruppen überführbar sind, enthaltendes Acrylatcopolymerisat und/oder einen weiteren acrylierten Polyester und/oder ein weiteres acryliertes Polyurethan mit einer OH-Zahl von 40 bis 200 mgKOH/g und einer Säurezahl von 5 bis 150 mgKOH/g und
   (A4) gegebenenfalls mindestens ein weiteres Polymer (A4)
      enthält
   und
II.) eine Komponente (II), die eine Polyisocyanatkomponente (F1) als Vernetzungsmittel enthält.

Gegenstand der vorliegenden Erfindung ist außerdem ein Verfahren zur Herstellung dieser wäßrigen Beschichtungsmittel sowie ihre Verwendung als Klarlack oder Decklack sowie ihre Verwendung zur Beschichtung von Kunststoffen.

Die Lackindustrie ist aus ökologischen und ökonomischen Gründen bestrebt, einen möglichst großen Teil der in Lacken eingesetzten organischen Lösemittel durch Wasser zu ersetzen. Sowohl für den Bereich der Automobilserienlackierung als auch für den Bereich der Autoreparaturlackierung kommen bereits wäßrige Beschichtungsmittel zum Einsatz. Auch im Bereich der Kunststofflackierung besteht verstärkt der Wunsch nach wäßrigen Systemen, und zwar sowohl im Bereich der Grundierungen als auch im Decklackbereich.

Unter Decklacken werden hierbei Lacke verstanden, die zur Herstellung der obersten Lackschicht verwendet werden. Die oberste Lackschicht kann dabei einschichtig oder mehrschichtig, insbesondere zweischichtig, sein. Zweischichtige Decklackierungen bestehen aus einer pigmentierten Basislackschicht und einer auf der Basislackschicht aufgebrachten unpigmentierten oder nur mit transparenten Pigmenten pigmentierten Klarlackschicht. Zweischichtlackierungen werden heute nach dem Naß-in-Naß-Verfahren hergestellt, bei dem ein pigmentierter Basislack vorlackiert wird und die so erhaltene Basislackschicht ohne Einbrennschritt mit einem Klarlack überlackiert und anschließend Basislackschicht und Klarlackschicht zusammen gehärtet werden. Dieses Verfahren ist ökonomisch sehr vorteilhaft, stellt aber hohe Anforderungen an den Basislack und den Klarlack. Der auf den noch nicht gehärteten Basislack applizierte Klarlack darf die Basislackschicht nicht anlösen oder sonst wie stören, weil sonst Lackierungen mit schlechtem Aussehen erhalten werden. Dies gilt insbesondere für Lackierungen, bei denen Basislacke, die Effektpigmente (z.B. Metallpigmente, insbesondere Aluminiumflakes oder Perlglanzpigmente) enthalten, eingesetzt werden.

Im Bereich der Kunststofflackierung besteht darüber hinaus die Forderung, daß die resultierenden Beschichtungen eine möglichst hohe Flexibilität bei gleichzeitig möglichst hoher Feuchteresistenz (z.B. niedrige Permeabilität) aufweisen. Ferner sollten die Beschichtungen ein sogenanntes gutes "appearance" zeigen. Dies bedeutet, daß die Beschichtungen beispielsweise einen hohen Glanz haben und daß die Beschichtungsmittel einen guten Verlauf zeigen. Ferner sollten die Beschichtungen eine gute Haftung aufweisen. Außerdem sollte die Komponente (I) des Beschichtungsmittels eine möglichst lange Lagerstabilität aufweisen.

Im Bereich der Kunststofflackierung besteht außerdem noch die Forderung, daß die eingesetzten Beschichtungsmittel bei niedrigen Temperaturen (im allgemeinen < 100°C) aushartbar sind und auch bei Aushärtung bei diesen niedrigen Temperaturen zu Filmen mit den gewünschten Eigenschaften führen.

Aus der DE-A-44 21 823 sind wäßrige Polyurethan-Beschichtungsmittel bekannt, die aus mindestens drei Komponenten bestehen, wobei die Komponente (I) mindestens ein in einem organischen Lösemittel gelöstes Bindemittel, ausgewählt aus der Gruppe der Polyesterharze, der Polyurethanharze, der Polyacrylatharze und ggf. weiterer Bindemittel enthält, die Komponente (II) mindestens ein nichtblockiertes Polyisocyanat als Vernetzungsmittel enthält und die Komponente (III) im wesentlichen bindemittelfrei ist und Wasser enthält. Zur Herstellung der Beschichtungsmittel werden die drei Komponenten kurz vor der Applikation der Beschichtungsmittel gemischt. Diese Beschichtungsmittel werden insbesondere im Bereich der Autoreparaturlackierung eingesetzt.

Diese aus der DE-A-44 21 823 bekannten Beschichtungsmittel weisen aber den Nachteil auf, daß ihre Herstellung recht aufwendig ist, da drei verschiedene Komponenten bevorratet und kurz vor der Applikation der Beschichtungsmittel miteinander gemischt werden müssen. Ferner enthält dieses Beschichtungsmittel eine organisch vorgelöste Bindemittelkomponente, deren Lösemittel auch im aus den drei Komponenten hergestellten Beschichtungsmittel enthalten ist.

Weiterhin sind aus der DE-A-43 26 670 wäßrige Zweikomponenten-Polyurethan-Beschichtungsmittel auf der Basis einer wäßrigen Dispersion mindestens eines Bindemittels mit einem zahlenmittleren Molekulargewicht von 1000 bis 100 000 und mit gegenüber Isocyanatgruppen reaktiven Gruppen, berechnet als OH-Zahl von 20 bis 250, und einer Säurezahl von 10 bis 100, deren Säurefunktionen zumindestens teilweise neutralisiert sind, und eines Polyisocyanates als Vernetzer bekannt. Als Beispiele für geeignete Bindemittel werden Polyacrylatharze, Polyesterharze, Polyurethanharze oder (meth)acrylierte Polyesterharze oder Polyurethanharze genannt.

Die Verwendung einer Mischung aus mindestens einem Polyester- und mindestens einem Polyurethanharz und mindestens einem Polyacrylatharz bzw. einem acrylierten Polyester und/oder einem acrylierten Polyurethan als Bindemittel ist in der DE-A-43 26 670 nicht beschrieben. Die aus der DE-A-43 26 670 bekannten Beschichtungsmittel weisen den Nachteil einer nicht ausreichenden Lagerstabilität auf.

Der vorliegenden Erfindung liegt somit die Aufgabe zugrunde, wäßrige Zweikomponenten-Polyurethan-Beschichtungsmittel zur Verfügung zu stellen, die für die Beschichtung von Kunststoffsubstraten, insbesondere im Bereich der Decklackierung, geeignet sind. Die resultierenden Beschichtungen sollten dabei vor allem eine möglichst hohe Elastizität bei gleichzeitig hoher Feuchteresistenz (z.B. niedrige Permeabilität) aufweisen. Ferner sollten die Beschichtungsmittel die Anforderungen erfüllen, die üblicherweise an Beschichtungsmittel gestellt werden, die für die Beschichtung von Kunststoffsubstraten eingesetzt werden. Beispielsweise sollten die Beschichtungsmittel daher auch zu Beschichtungen mit einem guten sogenannten "appearance" (guter Glanz, guter Verlauf u.ä.) und mit einer guten Haftung führen. Ferner sollte die Komponente (I) des Beschichtungsmittels eine möglichst lange Lagerstabilität aufweisen.

Schließlich sollten die Beschichtungsmittel bei niedrigen Temperaturen (im allgemeinen < 100°C) aushärtbar sein und auch bei Aushärtung bei diesen niedrigen Temperaturen zu Filmen mit den gewünschten Eigenschaften führen.

Diese Aufgabe wird überraschenderweise durch die Beschichtungsmittel der eingangs genannten Art gelöst, die dadurch gekennzeichnet sind, daß das Mischungsverhältnis des Polyesterharzes (A1) zu dem Polyurethanharz (A2) zwischen 95 Gewichtsteilen Polyesterharz : 5 Gewichtsteilen Polyurethanharz und 5 Gewichtsteilen Polyesterharz : 95 Gewichtsteilen Polyurethanharz liegt.

Die vorliegende Erfindung betrifft außerdem ein Verfahren zur Herstellung dieser Beschichtungsmittel sowie die Verwendung der Beschichtungsmittel als Decklack oder Klarlack sowie ihre Verwendung zur Beschichtung von Kunststoffen.

Es ist überraschend und war nicht vorhersehbar, daß durch die Verwendung einer Mischung aus mindestens einem Polyacrylatharz und/oder acryliertem Polyester und/oder acryliertem Polyurethanharz und mindestens einem Polyesterharz und mindestens einem Polyurethanharz als Bindemittel wäßrige Zweikomponenten-Polyurethan-Beschichtungsmittel erhalten werden, die zu Beschichtungen führen, die sowohl hinsichtlich der Flexibilität als auch gleichzeitig hinsichtlich der Feuchteresistenz verbesserte Eigenschaften im Vergleich zu Beschichtungen aufweisen, die unter Verwendung von mindestens einem Polyacrylatharz und/oder acryliertem Polyester und/oder acryliertem Polyurethanharz und entweder mindestens eines Polyesterharzes oder mindestens eines Polyurethanharzes erhalten werden.

Vorteilhaft ist ferner, daß die erfindungsgemäßen Beschichtungsmittel zu Beschichtungen mit einem guten "appearance" und mit einer guten Haftung führen. Außerdem weist die Komponente (I) des Beschichtungsmittels eine lange Lagerstabilität auf und die Beschichtungsmittel zeigen ein gutes Applikationsverhalten. Schließlich sind die Beschichtungsmittel bei niedrigen Temperaturen (im allgemeinen < 100°C) aushärtbar und führen auch bei Aushärtung bei diesen niedrigen Temperaturen zu Filmen mit den gewünschten Eigenschaften.

Im folgenden werden nun zunächst die einzelnen Komponenten der erfindungsgemäßen Beschichtungsmittel näher erläutert.

Es ist erfindungswesentlich, daß das Beschichtungsmittel als Bindemittel eine Mischung aus mindestens einem Polyacrylatharz und/oder einem acrylierten Polyester und/oder einem acrylierten Polyurethanharz und mindestens einem wasserlöslichen oder wasserdispergierbaren Polyesterharz (A1) und mindestens einem wasserlöslichen oder wasserdispergierbaren Polyurethanharz (A2) enthält, wobei das Mischungsverhältnis des Polyesterharzes (A1) zu dem Polyurethanharz (A2) zwischen 95 Gewichtsteilen Polyesterharz : 5 Gewichtsteilen Polyurethanharz und 5 Gewichtsteilen Polyesterharz : 95 Gewichtsteilen Polyurethanharz liegt. Bevorzugte Beschichtungsmittel werden erhalten, wenn das Mischungsverhältnis von Polyesterharz (A1) zu Polyurethanharz (A2) zwischen 90 Gewichtsteilen Polyesterharz : 10 Gewichtsteilen Polyurethanharz und 30 Gewichtsteilen Polyesterharz: 70 Gewichtsteilen Polyurethanharz, besonders bevorzugt zwischen 75 Gewichtsteilen Polyesterharz : 25 Gewichtsteilen Polyurethanharz und 50 Gewichtsteilen Polyesterharz : 50 Gewichtsteilen Polyurethanharz, liegt.

Als Polyesterharz (A1) zur Herstellung der erfindungsgemäßen Beschichtungsmittel sind alle wasserlöslichen oder wasserdispergierbaren, Hydroxylgruppen und Säuregruppen, die in die entsprechenden Säureaniongruppen überführbar sind, enthaltenden Polyesterharze (A1) mit einer OH-Zahl von 30 bis 250 mgKOH/g, besonders bevorzugt von 60 bis 200 mgKOH/g, und einer Säurezahl von 5 bis 150 mgKOH/g, bevorzugt von 15 bis 75 mgKOH/g und besonders bevorzugt von 20 bis 50 mgKOH/g, geeignet. Bevorzugt weisen die Polyesterharze (A1) zahlenmittlere Molekulargewichte Mn zwischen 500 und 30.000 Dalton, bevorzugt zwischen 1000 und 10.000 Dalton und besonders bevorzugt zwischen 1000 und 5.000 Dalton, jeweils gemessen gegen Polystyrolstandard, auf. Bevorzugt werden verzweigte Polyester eingesetzt.

Bevorzugt werden Polyester eingesetzt, die erhältlich sind durch Umsetzung von
p1) Di- und/oder Polycarbonsäuren oder deren veresterungsfähigen Derivaten, gegebenenfalls zusammen mit Monocarbonsäuren,
p2) Diolen,
p3) Polyolen, gegebenenfalls zusammen mit Monoolen, und
p4) gegebenenfalls weiteren modifizierenden Komponenten.

Besonders bevorzugt werden dabei Polyester eingesetzt, die ohne Verwendung von Monoolen und Monocarbonsäuren hergestellt worden sind. Ebenfalls besonders bevorzugt sind die Polyester frei von ungesättigten Fettsäuren.

Als Beispiele für Polycarbonsäuren, die als Komponente (p1) eingesetzt werden können, seien aromatische, aliphatische und cycloaliphatische Polycarbonsäuren genannt. Bevorzugt werden als Komponente (p1) aromatische und/oder aliphatische Polycarbonsäuren eingesetzt.

Beispiele für geeignete Polycarbonsäuren sind Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure und andere. Die cycloaliphtatischen Polycarbonsäuren können sowohl in ihrer cisals auch in ihrer trans-Form sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Beispiele für Monocarbonsäuren, die gegebenenfalls zusammen mit den Polycarbonsäuren eingesetzt werden können, sind Benzoesäure, tert.-Butylbenzoesäure, Laurinsäure, Isononansäure und hydrierte Fettsäuren natürlich vorkommender Öle, bevorzugt Isononansäure.

Geeignete Diole (p2) zur Herstellung des Polyesters (A2) sind beispielsweise Ethylenglykol, Propandiole, Butandiole, Hexandiole, Hydroxypivalinsäureneopentylglykolester, Neopentylglykol, Diethylenglykol, Cyclohexandiol, Cyclohexandimethanol, Trimethylpentandiol und Ethylbutylpropandiol. Ferner sind auch aliphatische Polyetherdiole, wie lineare oder verzweigte Poly(oxyethylen)glykole, Poly(oxypropylen)glykole und/oder Poly(oxybutylen)glykole und gemischte Polyetherdiole wie Poly(oxyethylenoxypropylen)glykole geeignet. Die Polyetherdiole haben üblicherweise eine Molmasse Mn von 400 bis 3000.

Ferner können als Diole auch aromatische oder alkylaromatische Diole eingesetzt werden, wie z. B. 2-Alkyl-2-phenyl-propan-1,3-diol, Bisphenol-Derivate mit Etherfunktionalität usw.

Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimethylolpropansäure.

Beispiele für als Komponente (p3) geeignete Polyole sind Ditrimethylolpropan, Trimethylolethan, Trimethylolpropan, Glycerin, Pentaerythrit, Homopentaerythrit, Dipentaerythrit, Trishydroxiethylisocyanat, 1,2,4 Butantriol, Propan- und Hexan-Triole, Trihydroxycarbonsäuren, wie Trishydroxymethyl(ethyl)ethansäuren. Die Polyole mit mindestens 3 OH-Gruppen können allein oder als Gemisch eingesetzt werden. Gegebenenfalls können die Triole zusammen mit einwertigen Alkoholen, wie beispielsweise Butanol, Octanol, Laurylalkohol, Cyclohexanol, tert.-Butylcyclohexanol, ethoxylierten bzw. propoxylierten Phenolen eingesetzt werden.

Als Komponente (p4) zur Herstellung der Polyester (A1) geeignet sind insbesondere Verbindungen, die eine gegenüber den funktionellen Gruppen des Polyesters reaktive Gruppe aufweisen. Als modifizierende Komponente (p4) können Diepoxidverbindungen, gegebenenfalls auch Monoepoxidverbindungen verwendet werden. Geeignete Komponenten (p4) sind beispielsweise in der DE-A-40 24 204 auf Seite 4, Zeilen 4 bis 9, beschrieben.

Als Komponente (p4) zur Herstellung der Polyester (A1) geeignet sind auch Verbindungen, die außer einer gegenüber den funktionellen Gruppen des Polyesters (A1) reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Die Herstellung der Polyester (A1) erfolgt nach den bekannten Methoden der Veresterung, wie dies beispielsweise in der DE-A-40 24 204, Seite 4, Zeilen 50 bis 65, beschrieben ist.

Die Umsetzung erfolgt dabei üblicherweise bei Temperaturen zwischen 180 und 280 Grad C, gegebenenfalls in Gegenwart eines geeigneten Veresterungskatalysators, wie z.B. Lithiumoctoat, Dibutylzinnoxid, Dibutylzinndilaurat, para-Toluolsulfonsäure und ähnlichen.

Üblicherweise wird die Herstellung der Polyester (A1) in Gegenwart geringer Mengen eines geeigneten Lösungsmittels als Schleppmittel durchgeführt. Als Schleppmittel werden z. B. aromatische Kohlenwasserstoffe, wie insbesondere Xylol und (cyclo)aliphatische Kohlenwasserstoffe, z. B. Cyclohexan, eingesetzt. Daneben ist es aber auch möglich, die Polyester lösemittelfrei (Umsetzung in Masse) herzustellen.

Besonders bevorzugt werden als Komponente (A1) Polyester eingesetzt, die nach einem zweistufigen Verfahren hergestellt worden sind, indem zunächst ein hydroxylgruppenhaltiger Polyester mit einer OH-Zahl von 100 bis 400 mgKOH/g, bevorzugt von 150 bis 3.50 mgKOH/g, einer Säurezahl von weniger als 10 mgKOH/g und einem zahlenmittleren Molekulargewicht Mn von 500 bis 2000 Dalton hergestellt wird, der dann in einer zweiten Stufe mit Carbonsäureanhydriden zu dem gewünschten Polyester (A1) umgesetzt wird. Die Menge an Carbonsäureanhydriden wird dabei so gewählt, daß der erhaltene Polyester die gewünschte Säurezahl aufweist. Für diese Umsetzung sind alle üblicherweise eingesetzten Säureanhydride, wie z.B. Hexahydrophthalsäureanhydrid, Trimellithsäureanhydrid, Pyromellithsäureanhydrid, Phthalsäureanhydrid, Camphersäureanhydrid, Tetrahydrophthalsäureanhydrid, Bernsteinsäureanhydrid und Gemische dieser und/oder anderer Anhydride und insbesondere Anhyride aromatischer Polycarbonsäuren, wie Trimellithsäureanhydrid, geeignet.

Neben dieser Umsetzung mit Carbonsäureanhydriden können die Säüregruppen ferner auch durch Verwendung von Dimethylolpropionsäure u.ä. in den Polyester eingeführt werden.

Als Polyurethanharz (A2) zur Herstellung der erfindungsgemäßen Beschichtungsmittel sind wasserlösliche oder wasserdispergierbare Hydroxylgruppen und Säuregruppen, die in die entsprechenden Säureaniongruppen überführbar sind, enthaltenden Polyurethanharze (A2) mit einer OH-Zahl von 20 bis 200 mgKOH/g, bevorzugt von 80 bis 180 mgKOH/g, und einer Säurezahl von 5 bis 150 mgKOH/g, jeweils bezogen auf Festharz,
die erhaltlich sind, indem in einer ersten Reaktionsstufe
(a) mindestens ein organisches Di- und/oder Polyisocyanat mit
(b) mindestens einer Verbindung, die mindestens eine gegenüber Isocyanatgruppen reaktive Gruppe und mindestens eine Gruppe, die die Wasserdispergierbarkeit gewährleistet, bevorzugt eine zur Anionenbildung befähigte Gruppe aufweist,
   zu einem Reaktionsprodukt mit freien Isocyanatgruppen umgesetzt werden, welches anschließend mit
(c) einem Polykondensationsprodukt aus
   (k1) 10 bis 45 Mol-% mindestens eines Diols,
   (k2) 5 bis 50 Mol-% mindestens eines Polyols mit mindestens 3 OH-Gruppen pro Molekül,
   (k3) 35 bis 47 Mol-% mindestens einer Di- und/oder Polycarbonsäure, ggf. zusammen mit einer Monocarbonsäure, und
   (k4) 0 bis 20 Mol-% mindestens eines Monools,
   wobei die Summe der Mol-%-Angaben der Komponenten (k1) bis (k4) jeweils 100 Mol-% beträgt, und
(d) 0 bis 20 Mol-%, bezogen auf die Komponente c, weiteren Alkoholkomponenten
zu dem Polyurethanharz (A2) umgesetzt wird, wobei die Mengen an den Komponenten (a) bis (d) so gewählt werden, daß das Polyurethanharz die gewünschten OH-Zahlen und Säurezahlen und ggf. die gewünschten Molekulargewichte aufweist, geeignet. Bevorzugt werden Polyurethanharze mit einem zahlenmittleren Molekulargewicht Mn zwischen 1000 und 30.000 Dalton, bevorzugt zwischen 1000 und 15.000 Dalton und besonders bevorzugt zwischen 1000 und 7.500 Dalton, jeweils gemessen gegen Polystyrolstandard, eingesetzt.

Bevorzugte Polyurethanharze werden erhalten, wenn die Komponenten (k1), (k2), (k3) und (k4) in solchen Mol-Verhältnissen eingesetzt werden, daß die Summe der OH-Bausteine (k1), (k2) und (k4) insgesamt und die Summe der COOH-Bausteine (k4) in einem Verhältnis von 0,8 : 1 bis 1,6 : 1 eingesetzt werden.

Die Mengenverhältnisse der Komponenten (a) bis (d) können über weite Bereiche und in Abhängigkeit von den Reaktionskomponenten gewählt werden. Enthält die Polyesterkomponente (c) keine hydrophilen Segmente, wie Polyetheranteile, werden vorzugsweise bis zu 1,1 Mol Polyester (c) pro Mol NCO-Equivalent umgesetzt, so daß ein Verhältnis OH : NCO ≥ 1 vorliegt. Wird ein polymerer Polyester mit hydrophilen Segmenten eingesetzt, so können auch mehr als 1,1 Mol Polyester (c) pro NCO-Equivalent eingesetzt werden.

Als geeignete multifunktionelle Isocyanate zur Herstellung der Polyurethanharze seien aliphatische, cycloaliphatische und/oder aromatische Polyisocyanate mit mindestens zwei Isocyanatgruppen pro Molekül genannt. Bevorzugt werden die Isomeren oder Isomerengemische von organischen Diisocyanaten. Aufgrund ihrer guten Beständigkeit gegenüber ultraviolettem Licht ergeben (cyclo)-aliphatische Diisocyanate Produkte mit geringer Vergilbungsneigung. Die zur Bildung des Polyurethanharzes gebrauchte PolyisocyanatKomponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendiisocyanat, Naphthylendiisocyanat, Diphenylmethandiisocyanat, Isophorondiisocyanat, Cyclobutandiisocyanat Cyclopentylendiisocyanat, Cyclohexylendiisocyanat, Methylcyclohexylendiisocyanat, Dicyclohexylmethandiisocyanat, Ethylendiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Zur Herstellung festkörperreicher Polyurethanharzlösungen werden insbesondere Diisocyanate der allgemeinen Formel (III') 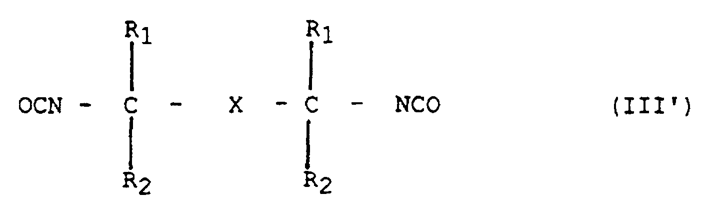 eingesetzt, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und R₁ und R₂ für einen Alkylrest mit 1 - 4 C-Atomen, bevorzugt für einen Methylrest, stehen. Diisocyanate der Formel (III') sind bekannt (ihre Herstellung wird beispielsweise in der EP-A-101 832, US-PS-3,290,350, US-PS-4,130,577 und der US-PS-4,439,616 beschrieben) und zum Teil im Handel erhältlich (1,3-Bis-(2-isocyanatoprop-2-yl)-benzol wird beispielsweise von der American Cynamid Company unter dem Handelsnamen TMXDI (META)® verkauft). Weiterhin bevorzugt als Polyisocyanatkomponente sind Diisocyanate der Formel (IV'): 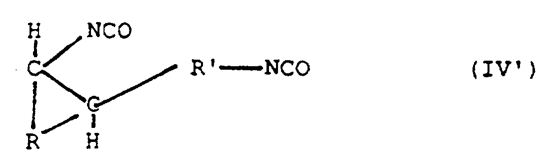 wobei R für einen zweiwertigen Alkyl- oder Aralkylrest mit 3 bis 20 Kohlenstoffatomen und R' für einen zweiwertigen Alkyl- oder Aralkylrest mit 1 bis 20 Kohlenstoffatomen steht.

Polyurethane sind im allgemeinen nicht mit Wasser verträglich, wenn nicht bei ihrer Synthese spezielle Bestandteile eingebaut und/oder besondere Herstellungsschritte vorgenommen werden. So werden zur Herstellung sowohl der bevorzugten, nach dem o.g. zweistufigen Verfahren hergestellten Polyurethanharze als auch zur Herstellung anderer, als Komponente (A2) eingesetzter Polyurethanharze Verbindungen verwendet, die mindestens eine mit Isocyanatgruppen reagierende Gruppe und mindestens eine Gruppe enthalten, die die Wasserdispergierbarkeit gewährleistet. Geeignete Gruppen dieser Art sind nichtionische Gruppen (z. B. Polyether), anionische Gruppen, Gemische dieser beiden Gruppen oder kationische Gruppen.

So kann bevorzugt eine so große Säurezahl in das Polyurethanharz eingebaut werden, daß das neutralisierte Produkt stabil in Wasser zu dispergieren ist. Hierzu dienen Verbindungen, die mindestens eine gegenüber Isocyanatgruppen reaktive Gruppe und mindestens eine zur Anionenbildung befähigte Gruppe enthalten. Geeignete gegenüber Isocyanatgruppen reaktive Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Vorzugsweise werden Alkansäuren mit zwei Substituenten am alpha-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Ganz besonders bevorzugt wird Dimethylolpropansäure eingesetzt. Das Carboxylgruppen enthaltene Polyol kann 1 bis 25 Gew.-%, vorzugsweise 1 bis 20 Gew.-%, des gesamten Polyolbestandteiles im Polyurethanharz (A2) ausmachen.

Die durch die Carboxylgruppenneutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 12 Gew.-%. Die Menge an Dihydroxyalkansäuren im unneutralisierten Präpolymer ergibt eine Säurezahl von wenigstens 5 mg KOH/g, vorzugsweise wenigstens 10 mg KOH/g. Bei sehr niedrigen Säurezahlen sind im allgemeinen weitere Maßnahmen zur Erzielung der Wasserdispergierbarkeit erforderlich.
Die obere Grenze der Säurezahl liegt bei 150 mg KOH/g, vorzugsweise bei 40 mg KOH/g, bezogen auf den Feststoff. Bevorzugt liegt die Säurezahl im Bereich von 20 bis 40 mg KOH/g.

Bezüglich der zur Herstellung des Polykondensationsproduktes (c) geeigneten Verbindungen (k1) bis (k4) sowie bezüglich der Reaktionsbedingungen zu deren Herstellung sei auf die Beschreibung der Polyesterharze (A1) verwiesen.

Bevorzugt werden Polykondensationsprodukte (c) eingesetzt, die eine OH-Zahl von 100 bis 400 mgKOH/g, bevorzugt von 150 bis 300 mgKOH/g, eine Säurezahl von 0 bis 50 mgKOH/g, bevorzugt von 0 bis 30 mgKOH/g und besonders bevorzugt von 1 bis 20 mgKOH/g, jeweils bezogen auf Festharz, sowie ein zahlenmittleres Molekulargewicht Mn zwischen 500 und 15.000 Dalton, bevorzugt zwischen 1000 und 10.000 Dalton, jeweils gemessen gegen Polystyrolstandard, aufweisen.

Beispiele für als weitere modifizierende Komponenten (d) geeignete Alkoholkomponenten sind Monoalkohole wie Nonanol und Decanol sowie Umsetzungsprodukte aus Monocarbonsäuren und Epoxiden. Bevorzugt werden als Komponente (d) Verbindungen mit im Mittel mehr als 1 OH-Gruppe pro Molekül eingesetzt.

Die Herstellung der Polyurethanharze kann nach den bekannten Verfahren erfolgen (z.B. Acetonverfahren). Die Umsetzung der Komponenten kann aber auch in Ethoxyethylpropionat (EEP) als Lösemittel erfolgen. Die Menge an Ethoxyethylpropionat kann dabei in weiten Grenzen variieren und sollte zur Bildung einer Präpolymerlösung mit geeigneter Viskosität ausreichen. Im allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10 - 15 Gew.-% EEP, bezogen auf den Festkörper, durchgeführt werden.

Die Umsetzung der Komponenten kann gegebenenfalls in Gegenwart eines Katalysators, wie Organozinnverbindungen und/oder tertiären Aminen, erfolgen.

Als Komponente (A3) enthalten die erfindungsgemäßen Beschichtungsmittel mindestens ein weiteres wasserlösliches oder wasserdispergierbares, Hydroxylgruppen und Säuregruppen, die in die entsprechenden Säureaniongruppen überführbar sind, enthaltendes Acrylatcopolymerisat und/oder einen weiteren acrylierten Polyester und/oder ein weiteres acryliertes Polyurethan mit einer OH-Zahl von 40 bis 200 mgKOH/g und einer Säurezahl von 5 bis 150 mgKOH/g.

Bevorzugt weisen die als Komponente (A3) eingesetzten Acrylatcopolymerisate zahlenmittlere Molekulargewichte zwischen 1.000 und 30.000 Dalton, bevorzugt zwischen 1.000 und 15.000 Dalton, jeweils gemessen gegen Polystyrolstandard, auf.

Als Hydroxylgruppen und Säuregruppen enthaltendes Acrylatcopolymerisat (A3) sind alle Acrylatcopolymerisate mit den angegebenen OH-Zahlen, Säurezahlen und Molekulargewichten geeignet.

Bevorzugt werden als Komponente (A3) Acrylatcopolymerisate eingesetzt, die erhältlich sind durch Polymerisation in einem organischen Lösemittel oder einem Lösemittelgemisch und in Gegenwart mindestens eines Polymerisationsinitiators von
a1)einem von (a2), (a3), (a4), (a5) und (a6) verschiedenen, mit (a2), (a3), (a4), (a5) und (a6) copolymerisierbaren, im wesentlichen säuregruppenfreien (Meth)acrylsäureester oder einem Gemisch aus solchen Monomeren,
a2)einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen säuregruppenfrei ist, oder einem Gemisch aus solchen Monomeren,
a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren und
a4)gegebenenfalls einem oder mehreren Vinylestern von in alpha-Stellung verzweigten Monocarbonsäuren mit 5 bis 18 C-Atomen je Molekül und/oder
a5)gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,
a6)gegebenenfalls einem mit (a1), (a2), (a3), (a4), und (a5) copolymerisierbaren, von (a1), (a2), (a4) und (a5) verschiedenen, im wesentlichen säuregruppenfreien, ethylenisch ungesättigten Monomer oder einem Gemisch aus solchen Monomeren,
wobei (a1), (a2), (a3), (a4), (a5) und (a6) in Art und Menge so ausgewählt werden, daß das Polyacrylatharz (A3) die gewünschte OH-Zahl, Säurezahl und das gewünschte Molekulargewicht aufweist.

Zur Herstellung der erfindungsgemäß eingesetzten Polyacrylatharze kann als Komponente (a1) jeder mit (a2), (a3), (a4), (a5) und (a6) copolymerisierbare, im wesentlichen säuregruppenfreie Ester der (Meth)acrylsaure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und - methacrylat und cycloaliphatische (Meth)acrylsäureester, wie z.B. Cyclohexyl(meth)acrylat, Isobornyl(meth)acrylat, Dicyclopentaen(meth)acrylat und tert.-Butylcyclohexyl(meth)acrylat genannt.

Als Komponente (a1) können auch Ethyltriglykol(meth)-acrylat und Methoxyoligoglykol(meth)acrylat mit einem zahlenmittleren Molekulargewicht Mn von vorzugsweise 550 Dalton oder andere ethoxylierte und/oder propoxylierte hydroxylgruppenfreie (Meth)acrylsäurederivate eingesetzt werden.

Als Komponente (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen säuregruppenfrei sind oder ein Gemisch aus solchen Monomeren eingesetzt werden. Als Beispiele werden Hydroxyalkylester der Acrylsäure, Methacrylsäure oder einer anderen alpha,beta-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure oder Methacrylsäure, in denen die Hydroxyalkylgruppe bis zu 20 Kohlenstoffatome enthält, Umsetzungsprodukte aus cyclischen Estern, wie z.B. epsilon-Caprolacton und diesen Hydroxyalkylestern, oder Mischungen aus diesen Hydroxyalkylestern bzw. epsilon-Caprolacton-modifizierten Hydroxyalkylestern eingesetzt.

Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat, 4-Hydroxybutylmethacrylat, Hydroxystearylacrylat und Hydroxystearylmethacrylat genannt. Entsprechende Ester von anderen ungesättigten Säuren, wie z.B. Ethacrylsäure, Crotonsäure und ähnliche Säuren mit bis zu etwa 6 C-Atomen pro Molekül, können auch eingesetzt werden.

Ferner können als Komponente (a2) auch olefinisch ungesättigte Polyole eingesetzt werden. Bevorzugte Polyacrylatharze (A3) werden erhalten, wenn als Komponente (a2) zumindest teilweise Trimethylolpropanmonoallylether eingesetzt wird. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Komponente (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren eingesetzt werden. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül eingesetzt werden. Als Beispiele für solche Säuren werden Ethacrylsäure, Crotonsäure, Maleinsäure, Fumarsäure und Itaconsäure genannt. Weiterhin können beispielsweise ethylenisch ungesättigte Sulfon- oder Phosphonsäuren, bzw. deren Teilester, als Komponente (a3) eingesetzt werden. Als Komponente (a3) können auch Maleinsäuremono(meth)acryloyloxyethylester, Bernsteinsäuremono(meth)acryloyloxyethylester und Phthalsäuremono (meth) acryloyloxyethylester eingesetzt werden.

Als Komponente (a4) werden ein oder mehrere Vinylester von in alpha-Stellung verzweigten Monocarbonsäuren mit 5 bis 18 C-Atomen im Molekül eingesetzt. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt.

Besonders bevorzugt werden - wegen der guten Verfügbarkeit- Vinylester von gesättigten aliphatischen Monocarbonsäuren mit 9 bis 11 C-Atomen, die am alpha-C-Atom verzweigt sind, eingesetzt.

Als Komponente (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acrylund/oder Methacrylsäure mit dem Glycidylester der Versaticsäure eingesetzt. Dieser Glycidylester ist unter dem Namen "Cardura E10" im Handel erhältlich.

Als Komponente (a6) können alle mit (a1), (a2), (a3), (a4) und (a5) copolymerisierbaren, von (a1), (a2), (a3) und (a4) verschiedenen, im wesentlichen säuregruppenfreien ethylenisch ungesättigten Monomere oder Gemische aus solchen Monomeren eingesetzt werden. Als Komponente (a6) werden vorzugsweise vinylaromatische Kohlenwasserstoffe, wie Styrol, alpha-Alkylstyrole und Vinyltoluol, eingesetzt.

Als Komponente (a6) können in Kombination mit anderen als Komponente (a6) geeignet genannten Monomeren auch Polysiloxanmakromonomere eingesetzt werden. Geeignet sind Polysiloxanmakromonomere, die ein zahlenmittleres Molekulargewicht Mn von 1.000 bis 40.000 Dalton, bevorzugt von 2.000 bis 10.000 Dalton, und im Mittel 0,5 bis 2,5, bevorzugt 0,5 bis 1,5, ethylenisch ungesättigte Doppelbindungen pro Molekül aufweisen. Geeignet sind beispielsweise die in der DE-A 38 07 571 auf den Seiten 5 bis 7, die in der DE-A 37 06 095 in den Spalten 3 bis 7, die in der EP-B 358 153 auf den Seiten 3 bis 6 und die in der US-A 4,754,014 in den Spalten 5 bis 9 beschriebenen Polysiloxanmakromonomere. Ferner sind auch andere Acryloxysilan-enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Bevorzugt werden als Komponente (a6) die in der DE-A 44 21 823 angeführten Polysiloxanmakromonomere eingesetzt.

Beispiele für als Komponente (a6) geeignete Polysiloxanmakromonomere sind auch die in der internationalen Patentanmeldung mit der Veröffentlichungsnummer WO 92/22615 auf Seite 12, Zeile 18, bis Seite 18, Zeile 10, genannten Verbindungen.

Die Einsatzmenge des oder der Polysiloxanmakromonomeren (a6) zur Modifizierung der Acrylatcopolymerisate (A1) beträgt weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (A3) eingesetzten Monomeren.

Die Verwendung derartiger Polysiloxanmakromonomerer führt zu einer Verbesserung des Slips der erfindungsgemäßen wäßrigen Beschichtungsmittel.

Besonders bevorzugt eingesetzte Acrylatharze werden erhalten durch Polymerisation von
(a1)20 bis 60 Gew.-%, bevorzugt 30 bis 50 Gew.-%, der Komponente (a1),
(a2)10 bis 40 Gew.-%, bevorzugt 15 bis 35 Gew.-%, der Komponente (a2),
(a3)1 bis 15 Gew.-%, bevorzugt 2 bis 8 Gew.-%, der Komponente (a3),
(a4)0 bis 25 Gew.-%, bevorzugt 5 bis 15 Gew.-%, der Komponente (a4),
(a5)0 bis 25 Gew.-%, bevorzugt 5 bis 15 Gew.-%, der Komponente (a5) und
(a6)5 bis 30 Gew.-%, bevorzugt 10 bis 20 Gew.-%, der Komponente (a6),
wobei die Summe der Gewichtsanteile der Komponenten (a1) bis (a6) jeweils 100 Gew.-% beträgt.

Die Herstellung der erfindungsgemäß eingesetzten Polyacrylatharze (A3) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Dabei können die Lösemittel an der Reaktion mit der vernetzenden Komponente (II) teilnehmen und somit als Reaktivverdünner wirken.

Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, Trimethylolpropan, 2-Hydroxypropionsäureethylester und 3-Methyl-3-methoxybutanol sowie Derivate auf Basis von Propylenglykol, z.B. Ethylethoxypropionat, Isopropoxypropanol, Methoxypropylacetat und ähnliche, genannt.

Es ist dabei auch möglich, die Polyacrylatarze (A3) zunächst in einem Lösemittel, das nicht wasserverdünnbar ist, herzustellen und dieses Lösemittel nach der Polymerisation gegebenenfalls teilweise durch wasserverdünnbares Lösemittel zu ersetzen.

Als Beispiele für brauchbare Polymerisationsinitiatoren werden freie Radikale bildende Initiatoren, wie z.B. tert.-Butylperoxyethylhexanoat, Benzoylperoxid, Azobisisobutyronitril und tert.-Butylperbenzoat genannt. Die Initiatoren werden bevorzugt in einer Menge von 2 bis 25 Gew.-%, besonders bevorzugt von 4 bis 10 Gew.-%, bezogen auf das Gesamtgewicht der Monomeren, eingesetzt.

Die Polymerisation wird zweckmäßigerweise bei einer Temperatur von 80 bis 160 Grad C, vorzugsweise 110 bis 160 Grad C, durchgeführt. Bevorzugt werden als Lösemittel n-Butanol, Ethoxyethylpropionat und Isopropoxypropanol eingesetzt.

Bevorzugt wird das Polyacrylatharz (A3) nach einem Zweistufenverfahren hergestellt, da so die resultierenden wäßrigen Beschichtungsmittel eine bessere Verarbeitbarkeit aufweisen. Bevorzugt werden daher Polyacrylatharze eingesetzt, die erhältlich sind, indem
1. ein Gemisch aus (a1), (a2), (a4), (a5) und (a6) oder ein Gemisch aus Teilen der Komponenten (a1), (a2), (a4), (a5) und (a6) in einem organischen Lösemittel polymerisiert wird,
2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und
3. nach Beendigung der Polymerisation das erhaltene Polyacrylatharz gegebenenfalls zumindest teilweise neutralisiert wird, d.h. die Säuregruppen in die entsprechende Säureaniongruppen überführt werden.

Daneben ist es aber auch möglich, die Komponenten (a4) und/oder (a5) zusammen mit zumindest einem Teil des Lösemittels vorzulegen und die restlichen Komponenten zuzudosieren. Außerdem können auch die Komponenten (a4) und/oder (a5) nur teilweise zusammen mit zumindest einem Teil des Lösemittels in die Vorlage gegeben werden und der Rest dieser Komponenten wie oben beschrieben zugegeben werden. Bevorzugt werden beispielsweise mindestens 20 Gew.-% des Lösemittels und ca. 10 Gew.-% der Komponente (a4) und (a5) sowie gegebenenfalls Teilen der Komponenten (a1) und (a6) vorgelegt. Bevorzugt ist außerdem die Herstellung der erfindungsgemäß eingesetzten Polyacrylatharze (A3) durch ein Zweistufenverfahren, bei dem die Stufe (I) 1 bis 8 Stunden, vorzugsweise 1,5 bis 4 Stunden, dauert und die Zugabe der Mischung aus (a3) und dem gegebenenfalls vorhandenen Rest der Komponenten (a1), (a2), (a4), (a5) und (a6) innerhalb von 20 bis 120 Minuten, vorzugsweise innerhalb von 30 bis 90 Minuten, erfolgt. Nach Beendigung der Zugabe der Mischung aus (a3)und dem gegebenenfalls vorhandenen Rest der Komponenten (a1), (a2), (a4), (a5) und (a6) wird so lange weiter polymerisiert, bis alle eingesetzten Monomeren im wesentlichen vollständig umgesetzt worden sind.

Die Menge und Zugabegeschwindigkeit des Initiators wird vorzugsweise so gewählt, daß ein Polyacrylatharz (A3) mit dem gewünschten zahlenmittleren Molekulargewicht erhalten wird. Es ist bevorzugt, daß mit dem Initiatorzulauf einige Zeit, im allgemeinen ca. 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Bevorzugt werden die Monomeren zur Herstellung der Polyacrylatharze (A3) bei einem nicht allzu hohen Polymerisationsfestkörper, bevorzugt bei einem Polymerisationsfestkörper von 80 bis 50 Gew,-%, polymerisiert und anschließend die Lösemittel teilweise destillativ entfernt, so daß die entstehenden Polyacrylatharzlösungen einen Festkörpergehalt von bevorzugt 80 bis 60 Gew.-% aufweisen.

Als Komponente (A3) geeignet sind ferner acrylierte Polyester mit einer OH-Zahl von 40 bis 200 mgKOH/g, besonders bevorzugt von 60 bis 160 mgKOH/g, und einer Säurezahl von 5 bis 150 mgKOH/g, bevorzugt von 15 bis 75 mgKOH/g und besonders bevorzugt von 20 bis 50 mgKOH/g. Bevorzugt weisen die acrylierten Polyester (A3) zahlenmittlere Molekulargewichte Mn zwischen 1.000 und 50.000 Dalton, bevorzugt zwischen 1.000 und 15.000 Dalton, jeweils gemessen gegen Polystyrolstandard, auf. Die als Komponente (A3) eingesetzten acrylierten Polyester sind bekannt. Geeignete acrylierte Polyester (A3) sind mit Hilfe verschiedener, dem Fachmann bekannter Verfahren , beispielsweise über den Einbau von Trimethylolpropan-monoallylether oder Maleinsäureanhydrid oder anderer reaktiver, mit Styrol und/oder (Meth)Acrylaten polymerisierbarer Anhydride und anschließender Acrylierung (organisch oder wäßrig), herstellbar.

Als Komponente (A3) geeignet sind ferner acrylierte Polyurethane mit einer OH-Zahl von 40 bis 200 mgKOH/g, besonders bevorzugt von 60 bis 160 mgKOH/g, und einer Säurezahl von 5 bis 150 mgKOH/g, bevorzugt von 15 bis 75 mgKOH/g und besonders bevorzugt von 20 bis 50 mgKOH/g. Bevorzugt weisen die acrylierten Polyurethane (A3) zahlenmittlere Molekulargewichte Mn zwischen 1.000 und 50.000 Dalton, bevorzugt zwischen 1.000 und 15.000 Dalton, jeweils gemessen gegen Polystyrolstandard, auf. Die als Komponente (A3) eingesetzten acrylierten Polyurethane sind ebenfalls bekannt. Geeignete acrylierte Polyurethane sind beispielsweise in der DE-A-41 22 265, Seite 2, Zeile 15, bis Seite 5, Zeile 44; der DE-A-40 10 176, Seite 2, Zeile 41, bis Seite 6, Zeile 64; der EP-A-308 115, Seite 2, Zeile 29, bis Seite 5, Zeile 21; der EP-A-510 572, Seite 3, Zeile 21, bis Seite 5, Zeile 42, und der US-A-4,496,708, Spalte 4, Zeile 5, bis Spalte 12, Zeile 46, beschrieben.

Als Komponente (A4) geeignet sind alle mit den übrigen Bestandteilen der Komponente (I) verträglichen Polymeren. Beispielsweise können als (A4) die als Beispiele für geeignete Vernetzer genannten Di- und/oder Polyisocyanate in blockierter Form eingesetzt werden. Beispielhaft für Blockierungsmittel für die angeführten Di- und/oder Polyisocyanate seien genannt: aliphatische, cycloaliphatische oder araliphatische Monoalkohole, wie beispielsweise Methyl-, Butyl-, Octyl-, Laurylalkohol, Cyclohexanol oder Phenylcarbinol, Hydroxylamine, wie Ethanolamin, Oxime, wie Methylethylketonoxim, Acetonoxim oder Cyclohexanonoxim, Amine, wie Dibutylamin oder Diisopropylamin, Malonsäurediester, Acetessigsäureethylester und/oder epsilon-Caprolactam.

Bevorzugt enthält die Komponente (I) als Bindemittel (A) eine Mischung aus
10 bis 50 Gew.-% der Mischung aus mindestens einem Polyester (A1) und mindestens einem Polyurethanharz (A2),
50 bis 90 Gew.-% mindestens eines Polyacrylatharzes (A3) und/oder mindestens eines acrylierten Polyesterharzes und/oder mindestens eines acrylierten Polyurethanharzes und
0 bis 10 Gew.-% mindestens eines weiteren Polymers (A4),
wobei die Summe der Gewichtsanteile der Komponenten jeweils 100 Gew.-% beträgt.

Bevorzugt werden außerdem Bindemittel (A) (d.h. Mischung der Komponenten (A1) bis (A4)) eingesetzt, die eine OH-Zahl von 50 bis 200, bevorzugt 80 bis 180 mgKOH/g, aufweisen.

Die Komponente (I) kann als weiteren Bestandteil (B) alle lacküblichen Pigmente in Anteilen von 0 bis 60 Gew.-%, bezogen auf Komponente I,enthalten. Die Pigmente können aus anorganischen oder organischen Verbindungen bestehen und können effekt- und/oder farbgebend sein.

Als Effektpigmente können Metallplättchenpigmente, wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden. Beispiele für geeignete anorganische farbgebende Pigmente sind Titandioxid, Eisenoxide, Sicotransgelb und Ruß. Beispiele für geeignete organische farbgebende Pigmente sind Indanthrenblau, Cromophthalrot, Irgazinorange und Heliogengrün.

Als weiteren Bestandteil (C) kann die Komponente (I) bzw. auch das Bindemittel mindestens ein organisches, partiell oder vollständig wasserlösliches Lösemittel enthalten. Solche Lösemittel können auch an der Reaktion mit der vernetzenden Komponente (II) teilnehmen und somit als Reaktivverdünner wirken. Beispiele für geeignete Lösemittel sind die schon bei der Herstellung der Polyacrylatharze (A3) genannten Verbindungen (siehe oben). Weiterhin geeignet sind Ester, Ketone, Ketoester, Glykoletherester und Glykolether, z.B. Ethylenglykol sowie 1, 2- und 1, 3-Propylenglykol.

Die Lösemittel (C) können weiterhin teilweise oder vollständig aus niedermolekularen oligomeren Verbindungen bestehen, die gegenüber der vernetzenden Komponente (II) reaktiv oder auch nicht reaktiv sein können. Die Lösemittel (C) werden üblicherweise in einer Menge von 0 bis 20 Gew.-%, bevorzugt von weniger als 15 Gew.-%, bezogen auf das Gesamtgewicht der Komponente (I), eingesetzt.

Als Bestandteil (D) enthält die Komponente (I) üblicherweise mindestens ein Neutralisationsmittel. Beispiele für geeignete Neutralisationsmittel sind Ammoniak, Ammoniumsalze, wie beispielsweise Ammoniumcarbonat oder Ammoniumhydrogencarbonat, sowie Amine, bevorzugt tertiäre Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Besonders bevorzugt wird als Neutralisationsmittel Dimethylethanolamin eingesetzt.

Die insgesamt in dem erfindungsgemäßen Beschichtungsmittel eingesetzte Menge an Neutralisationsmittel wird so gewählt, daß 1 bis 100 Äquivalente, bevorzugt 50 bis 90 Äquivalente der Säuregruppen des Bindemittels (A) neutralisiert werden.

Als Bestandteil (E) kann die Komponente (I) mindestens ein rheologiesteuerndes Additiv enthalten. Als Beispiele für rheologiesteuernde Additive werden genannt: vernetzte polymere Mikroteilchen, wie sie beispielsweise in der EP-A-38 127 offenbart sind, anorganische Schichtsilikate, wie z.B. Aluminium-Magnesium-Silikate, Natrium-Magnesium-Schichtsilikate und Natrium-Magnesium-Fluor-Lithium-Schichtsilikate des Montmorillonit-Typs, sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Urethane oder Polyacrylate. Bevorzugt werden als rheologiesteuernde Additive Polyurethane eingesetzt. Bevorzugt enthält die Komponente (I) 0 bis 2,0 Gew.-% des rheologiesteuernden Additivs, bezogen auf das Gesamtgewicht der Komponente (I).

Die Komponente (I) kann außerdem mindestens noch ein weiteres übliches Lackadditiv enthalten. Beispiele für derartige Additive sind Entschäumer, Dispergierhilfsmittel, Emulgatoren, und Verlaufshilfsmittel.

Schließlich enthält die Komponente (I) noch Wasser.

Die Lackkomponente (II) enthält als Vernetzungsmittel mindestens ein gegebenfalls in einem oder mehreren organischen, gegebenenfalls wasserverdünnbaren Lösemitteln gelöstes oder dispergiertes, vorzugsweise nichtblockiertes Di- und/oder Polyisocyanat (F1).

Bei der Polyisocyanatkomponente (F1) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind die bei der Beschreibung der Polyurethanharze (A2) genannten Isocyanate und/oder isocyanatgruppenhaltigen Polyurethanpräpolymere, die durch Reaktion von Polyolen mit einem Überschuß an Polyisocyanaten hergestellt werden können und die bevorzugt niederviskos sind.

Es können auch Isocyanuratgruppen und/oder Biuretgruppen und/oder Allophanatgruppen und/oder Urethangruppen und/oder Harnstoffgruppen und/oder Uretdiongruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (F1) kann im übrigen auch aus beliebigen Gemischen der beispielhaft genannten Polyisocyanate bestehen.

Die Polyisocyanatkomponente (F1) wird in den erfindungsgemäßen Beschichtungsmitteln vorteilhafterweise in einer solchen Menge eingesetzt, daß das Verhältnis der Hydroxylgruppen des Bindemittels (A) zu den Isocyanatgruppen des Vernetzers (F1) zwischen 1 : 2 und 2 : 1, besonders bevorzugt zwischen 1 : 1, und 1 : 1,5, liegt.

Die Herstellung der beiden Komponenten (I) und (II) des erfindungsgemäßen Beschichtungsmittels erfolgt nach den üblichen Methoden aus den einzelnen Bestandteilen unter Rühren. Die Herstellung des Beschichtungsmittel aus diesen beiden Komponenten (I) und (II) erfolgt ebenfalls mittels Rühren bzw. Dispergieren unter Verwendung der üblicherweise eingesetzten Vorrichtungen, beispielsweise mittels Dissolver o.ä. oder mittels ebenfalls üblicherweise eingesetzter 2-Komponenten-Dosier- und -mischanlagen oder mittels des in der DE-A-195 10 651, Seite 2, Zeile 62, bis Seite 4, Zeile 5, beschriebenen Verfahrens zur Herstellung wäßriger 2-K-Polyurethanlacke.

Die unter Verwendung der erfindungsgemäßen Bindemittel hergestellten wäßrigen Lacke enthalten im applikationsfertigen Zustand in der Regel 30 bis 80, vorzugsweise 45 bis 70 Gew.-% Wasser, 0 bis 50, vorzugsweise 0 bis 20 Gew.-% organische Lösemittel, 6 bis 70 und vorzugsweise 15 bis 70 Gew.-% des erfindungsgemäßen Bindemittels (A), vorzugsweise 0 bis 25 Gew.-% Pigmente und/oder Füllstoffe und 0 bis 10 Gew.-% sonstige Zusätze, wie z.B. Katalysatoren, Verdickungsmittel, Verlaufsmittel usw., wobei die Gewichtsprozentangaben auf die Gesamtrezeptur der Lacke im applikationsfertigen Zustand (d.h. z.B. bei Spritzviskosität) bezogen sind.

Mit den unter Verwendung der erfindungsgemäßen Bindemittel hergestellten wäßrigen Lacken können grundierte oder nicht grundierte Kunststoffe wie z. B. ABS, AMMA, ASA, CA, CAB, EP, UF, CF, MF, MPF, PF, PAN, PA, PC, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnun-gen nach DIN 7728T1) lackiert werden. Die zu lackierenden Kunststoffe können selbstverständlich auch Polymerblends, modifizierte Kunststoffe oder faserverstärkte Kunststoffe sein. Bevorzugt werden die erfindungsgemäßen Beschichtungsmittel zur Beschichtung von PPE/PA-Blends, Polycarbonat-Blends (z.B. PC/ASA, PC/PBT) und Polypropylen-Blends eingesetzt. Insbesondere kommen die erfindungsgemäßen Beschichtungsmittel für die üblicherweise im Fahrzeugbau, insbesondere Kraftfahrzeugbau, eingesetzten Kunststoffe zum Einsatz.

Im Falle von nichtfunktionalisierten und/oder unpolaren Substratoberflächen müssen diese vor der Beschichtung einer Vorbehandlung, wie Plasma.oder Beflammen, unterzogen werden.

Als Grundierung kommen dabei alle üblichen Grundierungen, und zwar sowohl konventionelle als auch wäßrige Grundierungen in Betracht. Selbstverständlich können auch strahlenhärtbare sowie strahlenhärtbare wäßrige Grundierungen eingesetzt werden.

Die erfindungsgemäßen Beschichtungsmittel werden zur Herstellung einer Ein- oder Mehrschichtlackierung und bevorzugt als Decklacke eingesetzt. Sie können aber auch als Klarlack über einer Basislackschicht, beispielsweise als Klarlack einer nach dem naß-in-naß-Verfahren hergestellten Mehrschichtlackierung eingesetzt werden. Selbstverständlich können die Kunststoffe oder die anderen Substrate auch direkt mit dem Klarlack oder dem Decklack beschichtet werden.

Schließlich können die Beschichtungsmittel auch auf andere Substrate, wie beispielsweise Metall, Holz oder Papier, appliziert werden. Die Applikation erfolgt mit Hilfe üblicher Methoden, beispielsweise Spritzen, Rakeln, Tauchen oder Streichen.

Die erfindungsgemäßen Beschichtungsmittel werden üblicherweise bei Temperaturen von unter 120 Grad C, bevorzugt bei Temperaturen von maximal 100 Grad C, gehärtet. In speziellen Anwendungsformen der erfindungsgemäßen Beschichtungsmittel können auch höhere Härtungstemperaturen angewendet werden.

Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden bevorzugt aber im Bereich der Reparaturlackierung und ganz besonders bevorzugt bei der Lackierung von Kunststoffteilen eingesetzt.

Nachfolgend wird die Erfindung anhand von Ausführungsbeispielen näher erläutert. Dabei bedeuten alle Teile Gewichtsteile, sofern nicht ausdrücklich etwas anderes angegeben wird.

### 1.1. Herstellung einer Dispersion eines Polyesterharzes (A1)

In einer für Polykondensationsreaktionen geeigneten Stahlapparatur wurden 7,43 kg Hexandiol, 25,72 kg Hydroxypivalinsäureneopentylglykolester, 4,23 kg Trimethylolpropan, 16,99 kg Hexahydrophthalsäureanhydrid, 0,016 kg Zinnoxid-hydrat und 2,529 kg Cyclohexan eingewogen und so lange auf maximal 220°C Produkttemperatur erhitzt, bis das Gemisch eine Säurezahl von 6 bis 8 und eine OH-Zahl von ca. 276 erreichte. Nach Erreichen der Säurezahl wurde auf 120°C abgekühlt und es wurden 9,06 kg Trimelithsäureanhydrid zugesetzt. Es wurde so weiter erhitzt - bis auf maximal 160°C - bis eine Säurezahl von 35 erreicht war. Man kühlte dann ab auf 80°C und gab 8,15 kg Isopropoxypropanol hinzu. Anschließend wurde bei dieser Temperatur 2,62 kg Dimethylethanolamin zugesetzt. Abschließend wurde mittels deionisiertem Wasser eine Dispersion hergestellt, die eine Säurezahl von 35 und einen Festkörper von 35%,einen Gehalt an Dimethylethanolamin von 1,83% und einen Gehalt an Lösemittel von 6,29% aufwies. Das Polyesterharz (A1) wies eine OH-Zahl von 143 mgKOH/g und eine Säurezahl von 36,4 mgKOH/g auf, jeweils bezogen auf Festharz.

### 1.2. Herstellung einer Dispersion eines Polyurethanharzes (A2)

### Polyester-Vorprodukt

Für 1 kg Polyester wurden 128,9 g Neopentylglykol, 318,9 g Hydroxypivalinsäureneopentylglykolester, 166,0 g Trimethylolpropan, 205,5 g Isophthalsäure, 40 g Xylol und 254,3 g Hexhydrophthalsäureanhydrid in einen für Polykondensationreaktionen geeigneten Stahlapparatur eingewogen und kontinuierlich aufgeheizt und das Kondenswasser kontinuierlich entfernt. Bei einer Säurezahl des Produktes von 3 wurde die Reaktion beendet und das Gemisch auf 100° C abgekühlt und mit Methylethylketon (MEK) auf 80 % Festkörper angelöst (Viskosität 50 %ig in MEK 0,2 Pas.). Das so erhaltene Kondensationsprodukt wies eine OH-Zahl von 202 mgKOH/g und eine Säurezahl von 3,5 mgKOH/g auf, jeweils bezogen auf Festharz.

### Urethanisierte Polyester-Dispersion 1:

In einem für Polyadditionsreaktionen geeigneten Stahlreaktor wurden 488,4 g meta-Tetramethylxylylendiisocyanat, 134,1 g Dimethylolpropoinsäure und 568,0 g Methylethylketon eingewogen und auf 80° C aufgeheizt. Bei einem konstanten Isocyanatgehalt von 7,4 % bezogen, auf die eingesetzte Mischung, kühlte man auf 50° C ab und gab 2110 g der Polyesterlösung zu. Anschließend wurde auf 80° C aufgeheizt. Bei einem Isocyanatgehalt < 0,1 % und einer Viskosität von 3,6 dPas (10,3 in N-Methylpyrolidon) wurde mit 71,2 g N,N-Dimethylethanolamin neutralisiert. Danach wird mit Wasser verdunnt und das organische Lösemittel unter Vakuum entfernt. Abschließend wurde ein Festkörper von 43% mit deionisiertem Wasser eingestellt. Der pH-Wert der Dispersion betrug 6,8. Die Dispersion war stippenfrei, homogen und mindestens 8 Wochen bei 50° C lagerstabil. Der DMEA-Gehalt betrug 1,42 %, der Lösemittelgehalt 0,5%. Das Polyurethanharz wies eine OH-Zahl von 98 mgKOH/g, eine Säurezahl von 26 mgKOH/g und ein zahlenmittleres Molekulargewicht von 1713, gemessen gegen Polystyrolstandard und bezogen auf Festharz, auf.

### 1.3. Herstellung einer Dispersion eines Acrylatharzes (A3)

In einem 41-Stahlkessel, ausgestattet mit zwei Monomerzuläufen, Initiatorzulauf, Rührer und Rückflußkühler, werden 470 Gew.-Teile n-Butanol als Lösemittelkomponente (B2) (Wasserlöslichkeit WL: 9,0, Verdunstungszahl VDZ: 33, Siedepunkt SDP: 118 Grad C) vorgelegt und auf 110 Grad C aufgeheizt. Dann wird eine Lösung von 36 Gew.-Teilen tert.-Butylperoxyethylhexanoat in 92,4 Gew.-Teilen n-Butanol (B2) in einer solchen Geschwindigkeit zugegeben, daß die Zugabe nach 5,5 Stunden abgeschlossen ist. Mit Beginn der Zugabe der tert-Butylperoxyethylhexanoat-Lösung wird auch mit der Zugabe der Mischung aus (a1) bis (a6):
- (a1):: 240 Gew.-Teilen n-Butylmethacrylat,
209 Gew.-Teilen Methylmethacrylat,
120 Gew.-Teilen Laurylmethacrylat
(Methacrylester 13 der Firma Röhm GmbH),
- (a2):: 270 Gew.-Teilen Hydroxyethylmethacrylat und
- (a6):: 180 Gew.-Teilen Styrol,
begonnen. Die Mischung aus (a1), (a2) und (a6) wird in einer solchen Geschwindigkeit zugegeben, daß die Zugabe nach 5 Stunden abgeschlossen ist.

3,5 Stunden nach Beginn des ersten Monomerenzulaufs wird ein zweiter Monomerenzulauf gestartet, der gemeinsam mit dem ersten Monomerenzulauf beendet wird und aus einer Mischung der Monomerkomponenten (a2) und (a5) besteht:
- (a2):: 120 Gew.-Teile Hydroxyethylmethacrylat und
- (a5):: 61 Gew.-Teile Acrylsäure.

Nach Abschluß der Zugabe der tert.-Butylperoxyethylhexanoatlösung wird die Reaktionsmischung noch 2 h bei 120 Grad C gehalten. Dann wird die Harzlösung auf 80 Grad C abgekühlt und innerhalb von etwa 30 Minuten mit 63 Gew.-Teilen Dimethylethanolamin in 1379 Gew.-Teilen bis zu einem Neutralisationsgrad von 85 % neutralisiert.
Anschließend wird das Lösemittel (B) n-Butanol durch azeotrope Destillation entfernt, bis höchstens 1 Gew.-% (B), bezogen auf die Dispersion, gaschromatographisch nachweisbar sind.

Nach Beendigung der Destillation wird die Dispersion durch die Zugabe von deionisiertem Wasser auf folgende Endkennzahlen eingestellt:
Säurezahl des Gesamtfestkörpers: 37,2 mg KOH/g, Feststoffgehalt (1 Stunde, 130 Grad C): 38,3 %,
pH-Wert: 7,40.
Gehalt an Dimethylethanolamin: 2,11 %
Gehalt an Lösemittel: 0,52 %
Das so hergestellte Acrylatharz (A3) wies ein zahlenmittleres Molekulargewicht von 7772 Dalton und ein gewichtsmittleres Molekulargewicht von 26651, gemessen gegen Polystyrolstandard, eine OH-Zahl von ca. 140 mgKOH/g und eine Säurezahl von 37,2 mgKOH/g auf, jeweils bezogen auf Festharz.

### 2. Herstellung der Beschichtungsmittel der Beispiele 1 bis 3 sowie der Vergleichsbeispiele 1 und 2

Aus den in der Tabelle 1 angegebenen Komponenten werden die Beschichtungsmittel hergestellt, indem zunächst die Komponente (I) aus den Komponenten (K-I-1) bis (K-I-15) und die Komponente (II) aus den Komponenten (K-II-1) bis (K-II-2) jeweils durch Mischen unter Verwendung eines Laborrührers hergestellt wird, dann die Komponenten (I) und (II) gemischt werden und anschließend mit Wasser die angegebene Viskosität eingestellt wird.

Die so hergestellten Beschichtungsmittel werden auf PP-Tafeln pneumatisch appliziert (Trockenfilmschichtdicke 30 -35 Mikrometer). Die so beschichteten Tafeln werden 45 min bei 90 °C eingebrannt und dann 8 Tage bei 22 °C und 50 % relativer Luftfeuchte gealtert. Danach werden die freien Klarlackfilme verschiedenen Prüfungen unterzogen. Die Prüfergebnisse der Beschichtungen sind in den Tabellen 2 und 3 zusammengefaßt.

Ferner zeichnen sich die Beschichtungsmittel der Beispiele 1 bis 3 durch sehr gute optische Eigenschaften (Appearance) aus. Darüber hinaus weisen die Komponenten (I) der Beispiele 1 bis 3 eine gute Lagerstabilität von mindestens einem halben Jahr bei 23 °C bzw. mindestens 8 Wochen bei 40 °C auf.

### Zusammenfassung der Prüfergebnisse

Die Beispiele 1 bis 3 zeigen, daß durch Verwendung einer Mischung von Polyesterharz und Polyurethanharz als weiteres Bindemittel zu Beschichtungen mit einer hohen Elastizität (hohe Werte der Bruchdehnung bei relativ hoher Bruchkraft) bei gleichzeitig geringer Permeabilität führen.

**Tabelle 1:**

| Zusammensetzung der Beschichtungsmittel der Beispiele 1 bis 3 und der Vergleichsbeispiele 1 und 2 in Gewichtsteilen | | | | | | |
|---|---|---|---|---|---|---|
| | | Beisp. 1 | Beisp. 2 | Beisp. 3 | Vergl. 1 | Vergl. 2 |
| PES (A1) | K-I-1 | 12,16 | 9,12 | 6,08 | 18,24 | - |
| PUR (A2) | K-I-2 | 4,95 | 7,42 | 9,90 | - | 14,85 |
| PAC (A3) | K-I-3 | 64,7 | 64,7 | 64,7 | 65,21 | 65,21 |
| BGA | K-I-4 | 4,899 | 4,899 | 4,899 | 4,899 | 4,899 |
| IPP | K-I-5 | 0,868 | 1,059 | 1,251 | 0,769 | 1,633 |
| PnB | K-I-6 | 3,267 | 3,267 | 3,267 | 3,267 | 3,267 |
| Wasser | K-I-7 | 5,452 | 5,827 | 6,200 | 3,909 | 6,439 |
| Verd. | K-I-8 | 1,955 | 1,955 | 1,955 | 1,955 | 1,955 |
| Emul. | K-I-9 | 0,652 | 0,652 | 0,652 | 0,652 | 0,652 |
| Benetz.1 | K-I-10 | 0,938 | 0,938 | 0,938 | 0,938 | 0,938 |
| Benetz.2 | K-I-11 | 0,078 | 0,078 | 0,078 | 0,078 | 0,078 |
| Verlauf. | K-I-12 | 0,078 | 0,078 | 0,078 | 0,078 | 0,078 |
| Licht. 1 | K-I-13 | 0,155 | 0,155 | 0,155 | 0,155 | 0,155 |
| licht. 2 | K-I-15 | 0,271 | 0,271 | 0,271 | 0,271 | 0,271 |
| Summe | - | 100 | 100 | 100 | 100 | 100 |
| FK BM | - | 31,17 | 31,17 | 31,17 | 31,17 | 31,17 |
| FK(A1)/ FK(A2) | - | 2,000 | 1,000 | 0,500 | - | - |
| Isocyan. | K-II-1 | 21,60 | 21,38 | 21,16 | 21,96 | 20,73 |
| EEP | K-II-2 | 5,40 | 5,34 | 5,29 | 5,49 | 5,18 |
| Wasser Viskos. | K-III | 15,00 | 15,00 | 15,00 | 15,00 | 15,00 |
| OH(FK)/ NCO(mol) | - | 0,717 | 0,717 | 0,717 | 0,717 | 0,717 |

Erläuterungen zu Tabelle 1
- PES (A1):: unter 1.1 beschriebene Polyesterdispersion (A1)
- PUR (A2):: unter 1.2 beschriebene Polyurethandispersion (A2)
- PAC (A3):: unter 1.3 beschriebene Polyacrylatdispersion (A3)
- BGA:: (2-Butoxyethyl)acetat
- IPP:: (1(2)-Isopropoxypropanol-2(1))
- PnB:: (1(2)Butoxypropanol-2(1))
- Verd.:: 10%-ige Lösung in Wasser eines handelsüblichen Verdickungsmittels auf Basis Dialkylpolyglykolether
- Emul.:: handelsüblicher Emulgator auf Basis Octylphenolpolyglykolether
- Benetz.1:: handelsübliches polyethermodifiziertes Dimethyloligosiloxan
- Benetz.2:: handelsübliches polyethermodifiziertes Dimethylpolysiloxan
- Verlauf.:: handelsübliches Verlaufsmittel auf Basis eines polyethermodifiziertes Polysiloxan
- Licht. 1:: handelsübliches Lichtschutzmittel auf Basis eines sterisch gehinderten Amins (HALS)
- Licht. 2:: handelsübliches Lichtschutzmittel auf Basis Benztriazol
- Isocyan.:: handelsübliches Isocyanat (100%ig) auf Basis eines Hexamethylendiisocyanat-Allophanats mit einem NCO Gehalt von 20%
- FK(BM):: Festkörpergehalt des Bindemittels, Summe von (A1)+(A2)+(A3)
- EEP:: Ethoxyethylpropionat
- Wasser visk.:: zur Viskositätseinstellung zugesetztes Wasser
- OH(FK)/NCO(mol.):: Verhältnis der OH Gruppen des Bindemittels (Summe aus (A1) + (A2) + (A3)) zu den NCO Gruppen des Vernetzungsmittels

**Tabelle 2:**

| Ergebnisse der Prüfung der Permeabilität (100 Mikrometer x g x m ⁻² x d ⁻¹) gegenüber Wasserdampf | |
|---|---|
| | 40 °C |
| Vergleichsbeisp.1 | 121 |
| Beispiel 1 | 61 |
| Beispiel 2 | 68,8 |
| Beispiel 3 | 63,5 |
| Vergleichsbeisp.2 | 74,5 |

**Tabelle 3:**

| Ergebnisse der Prüfung der mechanischen Eigenschaften | | | | | |
|---|---|---|---|---|---|
| | Vergl. 1 | Beisp. 1 | Beisp. 2 | Beisp. 3 | Vergl. 2 |
| Bruchkraft (N) | 5,4 | 6,7 | 8,4 | 7 | 8,7 |
| Bruchdeh. (%) | 19 | 20 | 22 | 13 | 9 |
| Deh. F-max (%) | 10 | 8 | 5,5 | 5 | 4,6 |

### Erläuterungen der Tabellen 2 und 3:

Die Permeabilität gegenüber Wasserdampf wurde an mit Wasser gesättigten Filmen mittels der Trägergasmethode bei 40 °C bestimmt.

Ferner werden die freien Filme in einer ZWICK - Universalprüfmaschine im Zug/Dehn-Versuch charakterisiert. Angegeben ist die Bruchkraft in N, die Bruchdehnung in % und die Dehnung bei F-max in %.

## Patentansprüche

1. Wäßriges Zweikomponenten-Polyurethan-Beschichtungsmittel, enthaltend
I) eine Komponente (I), die als Bindemittel (A)
(A1) mindestens ein wasserlösliches oder wasserdispergierbares, Hydroxylgruppen und Säuregruppen, die in die entsprechenden Säureaniongruppen überführbar sind, enthaltendes Polyesterharz (A1) mit einer OH-Zahl von 30 bis 250 mg KOH/g und einer Säurezahl von 5 bis 150 mg KOH/g und
(A2) mindestens ein wasserlösliches oder wasserdispergierbares, Hydroxylgruppen und Säuregruppen, die in die entsprechenden Säureaniongruppen überführbar sind, enthaltendes Polyurethanharz (A2) mit einer OH-Zahl von 20 bis 200 mg OH/g und einer Säurezahl von 5 bis 150 mg KOH/g, wobei das Polyurethanharz (A2) herstellbar ist, indem
in einer ersten Reaktionsstufe
(a) mindestens ein organisches Di- und/oder Polyisocyanat (a) mit
(b) mindestens einer Verbindung (b), die mindestens eine gegenüber Isocyanatgruppen reaktive Gruppe und mindestens eine Gruppe, die die Wasserdispergierbarkeit gewährleistet, aufweist,
zu einem Reaktionsprodukt mit freien Isocyanatgruppen umgesetzt werden, welches anschließend mit
(c) einem Polykondensationsprodukt (c) aus
(k1) 10 bis 45 Mol-% mindestens eines Diols,
(k2) 5 bis 50 Mol-% mindestens eines Polyols mit mindestens 3 OH-Gruppen pro Molekül,
(k3) 35 bis 47 Mol-% mindestens einer Di- und/oder Polycarbonsäure, ggf. zusammen mit einer Monocarbonsäure, und
(k4) 0 bis 20 Mol-% mindestens eines Monools,
wobei die Summe der Mol-%-Angaben der Komponenten (k1) bis (k4) jeweils 100 Mol-% beträgt und
(d) 0 bis 20 Mol-%, bezogen auf die Komponente (c), mindestens einer weiteren Alkoholkomponente
zu dem Polyurethanharz (A2) umgesetzt wird, wobei die Mengen der Komponenten (a) bis (d) so gewählt werden, daß das Polyurethanharz die gewünschten OH-Zahlen und Säurezahlen und ggf. die gewünschten Molekulargewichte aufweist und
(A3) mindestens ein weiteres wasserlösliches oder wasserdispergierbares, Hydroxylgruppen und Säuregruppen, die in die entsprechenden Säureaniongruppen überführbar sind, enthaltendes Acrylatcopolymerisat und/oder einen weiteren acrylierten Polyester und/oder ein weiteres acryliertes Polyurethan mit einer OH-Zahl von 40 bis 200 mg KOH/g und einer Säurezahl von 5 bis 150 mg KOH/g und
(A4) gegebenenfalls mindestens ein weiteres Polymer (A4) enthält und
II) eine Komponente (II), die eine Polyisocyanatkomponente (F1) als Vernetzungsmittel enthält,
**dadurch gekennzeichnet, daß** das Mischungsverhältnis des Polyesterharzes (A1) zu dem Polyurethanharz (A2) zwischen 95 Gewichtsteilen Polyesterharz : 5 Gewichtsteilen Polyurethanharz und 5 Gewichtsteilen Polyesterharz : 95 Gewichtsteilen Polyurethanharz liegt.

2. Wäßriges Beschichtungsmittel nach Anspruch 1, **dadurch gekennzeichnet, daß** das Mischungsverhältnis von Polyesterharz (A1) zu Polyurethanharz (A2) zwischen 90 Gewichtsteilen Polyesterharz : 10 Gewichtsteilen Polyurethanharz und 30 Gewichtsteilen Polyesterharz : 70 Gewichtsteilen Polyurethanharz, liegt.

3. Beschichtungsmittel nach einem der Ansprüche 1 oder 2, **dadurch gekennzeichnet, daß** die Komponente (I) als Bindemittel
10 bis 50 Gew.-% der Mischung aus mindestens einem Polyester (A1) und mindestens einem Polyurethanharz (A2),
50 bis 90 Gew.-% mindestens eines weiteren Polyacrylatharzes (A3) und/oder mindestens eines weiteren acrylierten Polyesterharzes und/oder mindestens eines weiteren acrylierten Polyurethanharzes und
0 bis 10 Gew.-% mindestens eines weiteren Polymers (A4),
enthält, wobei die Summe der Gewichtsanteile der Komponenten jeweils 100 Gew.-% beträgt und/oder das Bindemittel (A) eine OH-Zahl von 50 bis 200 mg KOH/g, aufweist.

4. Beschichtungsmittel nach einem der Ansprüche 1 bis 3, **dadurch gekennzeichnet, daß** das Acrylatcopolymerisat (A3) erhältlich ist, indem in einem organischen Lösemittel oder einem Lösemittelgemisch und in Gegenwart mindestens eines Polymerisationsinitiators
a1) ein von (a2), (a3), (a4), (a5) und (a6) verschiedener, mit (a2), (a3), (a4), (a5) und (a6) copolymerisierbarer, säuregruppenfreier (Meth)acrylsäureester oder ein Gemisch aus solchen Monomeren,
a2) ein mit (a1), (a2), (a3), (a4), (a5) und (a6) copolymerisierbares, von (a5) verschiedenes, ethylenisch ungesättigtes Monomer, das mindestens eine Hydroxylgruppe pro Molekül trägt und säuregruppenfrei ist, oder ein Gemisch aus solchen Monomeren,
a3) ein mindestens eine Säuregruppe pro Molekül tragendes, mit (a1), (a2), (a4), (a5) und (a6) copolymerisierbares, ethylenisch ungesättigten Monomer oder ein Gemisch aus solchen Monomeren und
a4) gegebenenfalls ein oder mehrere Vinylester, von in alpha-Stellung verzweigten Monocarbonsäuren mit 5 bis 18 C-Atomen je Molekül und/oder
a5) gegebenenfalls mindestens ein Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,
a6) gegebenenfalls ein mit (a1), (a2), (a3), (a4), und (a5) copolymerisierbares, von (a1), (a2), (a4) und (a5) verschiedenes, säuregruppenfreies, ethylenisch ungesättigtes Monomer oder ein Gemisch aus solchen Monomeren
polymerisiert werden, wobei (a1), (a2), (a3), (a4), (a5) und (a6) in Art und Menge so ausgewählt werden, daß das Polyacrylatharz (A3) die gewünschte OH-Zahl, Säurezahl und das gewünschte Molekulargewicht aufweist.

5. Beschichtungsmittel nach einem der Ansprüche 1 bis 4, **dadurch gekennzeichnet, daß** das Polyesterharz (A1) erhältlich ist durch Umsetzung von
p1) Di- und/oder Polycarbonsäuren oder deren veresterungsfähigen Derivaten, gegebenenfalls zusammen mit Monocarbonsäuren,
p2) Diolen
p3) Polyolen, gegebenenfalls zusammen mit Monoolen, und
p4) gegebenenfalls weiteren modifizierenden Komponenten.

6. Beschichtungsmittel nach einem der Ansprüche 1 bis 5, **dadurch gekennzeichnet, daß** das Polyurethanharz (A2) erhältlich ist unter Verwendung von Diisocyanaten der allgemeinen Formel (III) 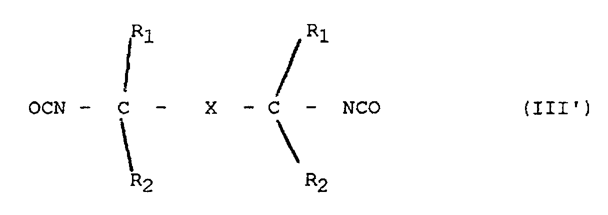 wobei X für einen zweiwertigen, aromatischen Kohlenwasserstoffrest, steht,
und/oder indem Diisocyanate der allgemeinen Formel (IV') eingesetzt werden: 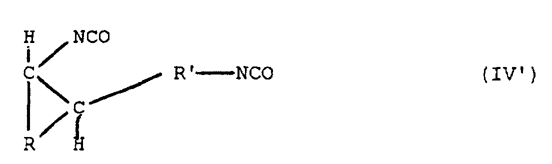 wobei R für einen zweiwertigen Alkyl- oder Aralkylrest mit 3 bis 20 Kohtenstoffatomen und R' für einen zweiwertigen Alkyl- oder Aralkylrest mit 1 bis 20 Kohlenstoffatomen steht.

7. Beschichtungsmittel nach einem der Ansprüche 1 bis 6, **dadurch gekennzeichnet, daß** die Bindemittel (A1) bis (A4) und das Vernetzungamittel (F1) in solchen Mengen eingesetzt werden, daß das Äquivalentverhältnis von Hydroxylgruppen der Komponenten (A1) bis (A4) des Bindemittels (A) zu den Isocyanatgruppen des Vemetzungsmittels (F1) zwischen 1 : 2 und 2 : 1, liegt.

8. Verwendung der Beschichtungsmittel nach einem der Ansprüche 1 bis 7 zur Beschichtung von Kunststoffen.

9. Verwendung der Beschichtungsmittel nach einem der Ansprüche 1 bis 7 als Decklack oder als Klarlack, insbesondere als Decklack.

## Claims

1. An aqueous two-component polyurethane coating composition comprising
I.) a component (I) which contains as binder (A)
(A1) at least one water-soluble or water-dispersible polyester resin (A1) which contains hydroxyl groups and acid groups which can be converted into the corresponding acid anion groups and has an OH number of from 30 to 250 mg of OH/g and an acid number of from 5 to 150 mg of KOH/g, and
(A2) at least one water-soluble or water-dispersible polyurethane resin (A2) which contains hydroxyl groups and acid groups which can be converted into the corresponding acid anion groups and has an OH number of from 20 to 200 mg of OH/g and an acid number of from 5 to 150 mg of KOH/g, the polyurethane resin (A2) being preparable by reacting
in a first reaction step
(a) at least one organic di- and/or polyisocyanate (a) with
(b) at least one compound (b) containing at least one group which is capable of reacting with isocyanate groups and at least one group which ensures water dispersibility,
to give a reaction product having free isocyanate groups which is then reacted with
(c) a polycondensation product (c) comprising
(k1) 10 to 45 mol% of at least one diol,
(k2) 5 to 50 mol% of at least one polyol having at least 3 OH groups per molecule,
(k3) 35 to 47 mol% of at least one di- and/or polycarboxlic acid, if desired together with a monocarboxylic acid, and
(k4) 0 to 20 mol% of at least one monool, the sum of the mol% of the components (k1) to (k4) being in each case 100 mol%, and
(d) 0 to 20 mol%, relative to component (c), of at least one further alcohol component
to give the polyurethane resin (A2), the amounts of components (a) to (d) being selected such that the polyurethane resin has the desired OH numbers and acid numbers and, if desired, the desired molecular weights, and
(A3) at least one further water-soluble or water-dispersible acrylate copolymer which contains hydroxyl groups and acid groups which can be converted into the corresponding acid anion groups, and/or one further acrylated polyester and/or one further acrylated polyurethane, which has an OH number of from 40 to 200 mg of KOH/g and an acid number of from 5 to 150 mg of KOH/g, and
(A4) if desired, at least one further polymer (A4)
and
II.) a component (II) which contains a polyisocyanate component (F1) as crosslinking agent, wherein the mixing ratio of the polyester resin (A1) to the polyurethane resin (A2) is between 95 parts by weight of polyester resin : 5 parts by weight of polyurethane resin and 5 parts by weight of polyester resin : 95 parts by weight of polyurethane resin.

2. An aqueous coating composition as claimed in claim 1, wherein the mixing ratio of polyester resin (A1) to polyurethane resin (A2) is between 90 parts by weight of polyester resin : 10 parts by weight of polyurethane resin and 30 parts by weight of polyester resin : 70 parts by weight of polyurethane resin.

3. A coating composition as claimed in either of claims 1 and 2, wherein component (I) contains as binder
10 to 50% by weight of the mixture comprising at least one polyester (A1) and at least one polyurethane resin (A2),
50 to 90% by weight of at least one further polyacrylate resin (A3) and/or at least one further acrylated polyester resin and/or at least one further acrylated polyurethane resin and
0 to 10% by weight of at least one further polymer (A4),
the sum of the weight proportions of the components being in each case 100% by weight and/or the binder (A) having an OH number of from 50 to 200 mg of KOH/g.

4. A coating composition as claimed in one of claims 1 to 3, wherein the acrylate copolymer (A3) is obtainable by polymerizing
a1) a (meth)acrylate which is different from (a2), (a3), (a4), (a5) and (a6), copolymerizable with (a2), (a3), (a4), (a5) and (a6) and free of acid groups or a mixture of such monomers,
a2) an ethylenically unsaturated monomer which is copolymerizable with (a1), (a2), [sic] (a3), (a4), (a5) and (a6), different from (a5) and carries at least one hydroxyl group per molecule and is free of acid groups, or a mixture of such monomers,
a3) an ethylenically unsaturated monomer which carries, per molecule, at least one acid group and is copolymerizable with (a1), (a2), (a4), (a5) and (a6), or a mixture of such monomers, and
a4) if desired one or more vinyl esters of alpha-branched monocarboxylic acids having 5 to 18 carbon atoms per molecule, and/or
a5) if desired at least one reaction product of acrylic acid and/or methacrylic acid with the glycidyl ester of an alpha-branched monocarboxylic acid having 5 to 18 carbon atoms per molecule or, instead of the reaction product, an equivalent amount of acrylic and/or methacrylic acid which is then reacted, during or after the polymerization reaction, with the glycidyl ester of an alpha-branched monocarboxylic acid having 5 to 18 carbon atoms per molecule,
a6) if desired an ethylenically unsaturated monomer which is copolymerizable with (a1), (a2), (a3), (a4) and (a5), is different from (a1), (a2), (a4) and (a5) and is free of acid groups, or a mixture of such monomers
in an organic solvent or a solvent mixture and in the presence of at least one polymerization initiator,
type and amount of (a1), (a2), (a3), (a4), (a5) and (a6) being selected such that polyacrylate resin (A3) has the desired OH number, acid number and the desired molecular weight.

5. A coating composition as claimed in one of claims 1 to 4, wherein the polyester resin (A1) is obtainable by reacting
p1) di- and/or polycarboxylic acids or esterifiable derivatives thereof, if desired together with monocarboxylic acids,
p2) diols,
p3) polyols, if desired together with monools, and
p4) if desired further modifying components.

6. A coating composition as claimed in one of claims 1 to 5, wherein the polyurethane resin (A2) is obtainable by using diisocyanates of the general formula (III) 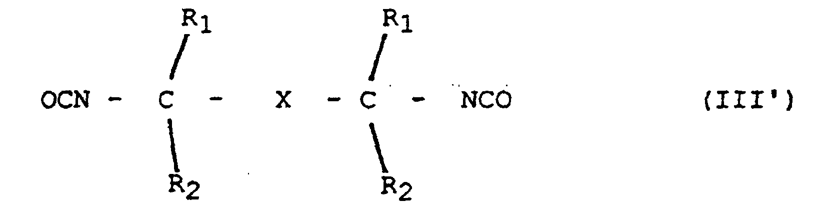 where X is a divalent aromatic hydrocarbon radical,
and/or by using diisocyanates of the general formula (IV'): 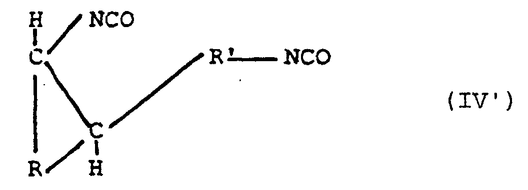 where R is a divalent alkyl or aralkyl radical having 3 to 20 carbon atoms and R' is a divalent alkyl or aralkyl radical having 1 to 20 carbon atoms.

7. A coating composition as claimed in one of claims 1 to 6, wherein the binders (A1) through (A4) and the crosslinking agent (F1) are used in such amounts that the equivalent ratio of hydroxyl groups of components (A1) through (A4) of binder (A) to the isocyanate groups of the crosslinking agent (F1) is between 1 : 2 and 2 : 1.

8. Use of a coating composition as claimed in one of claims 1 to 7 for coating plastics.

9. Use of a coating composition as claimed in one of claims 1 to 7 as topcoat or as clearcoat, in particular as topcoat.

## Revendications

1. Composition aqueuse de revêtement polyuréthanne à deux composants contenant
I.) un composant (I) qui contient en tant que liant (A)
(A1) au moins une résine polyester (A1) soluble dans l'eau ou dispersable dans l'eau, contenant des groupes hydroxy et des groupes acides qui peuvent être convertis en les groupes anion d'acide correspondants, et ayant un indice de groupes OH allant de 30 à 250 mg de KOH/g et un indice d'acide de 5 à 150 mg de KOH/g, et
(A2) au moins une résine polyuréthanne (A2) soluble dans l'eau ou dispersable dans l'eau, contenant des groupes hydroxy et des groupes acides qui peuvent être convertis en les groupes anion d'acide correspondants, et ayant un indice de groupes OH allant de 20 à 200 mg de KOH/g et un indice d'acide de 5 à 150 mg de KOH/g, la résine polyuréthanne (A2) pouvant être préparée en faisant réagir
dans une première étape de réaction
(a) au moins un di- et/ou polyisocyanate organique (a) avec
(b) au moins un composé (b) qui comporte au moins un groupe réactif vis-à-vis de groupes isocyanate et au moins un groupe qui assure la dispersibilité dans l'eau,
pour l'obtention d'un produit de réaction comportant des groupes isocyanate libres, qui est ensuite mis en réaction avec
(c) un produit de polycondensation (c) formé à partir de
(k1) 10 à 45 % en moles d'au moins un diol,
(k2) 5 à 50 % en moles d'au moins un polyol comportant au moins 3 groupes OH par molécule,
(k3) 35 à 47 % en moles d'au moins un acide di- et/ou polycarboxylique, éventuellement conjointement avec un acide monocarboxylique, et
(k4) 0 à 20 % en moles d'au moins un mono-alcool,
la somme des pourcentages en moles des composants (k1) à (k4) étant dans chaque cas de 100 % en moles, et
(d) 0 à 20 % en moles, par rapport au composant (c), d'au moins un autre composant alcool, pour l'obtention de la résine polyuréthanne (A2), les quantités des composants (a) à (d) étant choisies de manière que la résine polyuréthanne présente les indices de groupes OH et indices d'acide désirés et éventuellement les masses moléculaires désirées, et
(A3) au moins un copolymère d'acrylate soluble dans l'eau ou dispersable dans l'eau, contenant des groupes hydroxy et des groupes acides qui peuvent être convertis en les groupes anion d'acide correspondants,
et/ou un autre polyester acryloylé et/ou un autre polyuréthanne acryloylé, ayant un indice de groupes OH de 40 à 200 mg de KOH/g et un indice d'acide de 5 à 150 mg de KOH/g, et
(A4) éventuellement au moins un autre polymère (A4) et
II.) un composant (II) qui contient un composant polyisocyanate (F1) en tant qu'agent de réticulation,
**caractérisée en ce que** le rapport de mélange de la résine polyester (A1) à la résine polyuréthanne (A2) est compris entre 95 parties en poids de résine polyester : 5 parties en poids de résine polyuréthanne et 5 parties en poids de résine polyester : 95 parties en poids de résine polyuréthanne.

2. Composition aqueuse de revêtement selon la revendication 1, **caractérisée en ce que** le rapport de mélange de la résine polyester (A1) à la résine polyuréthanne (A2) est compris entre 90 parties en poids de résine polyester : 10 parties en poids de résine polyuréthanne et 30 parties en poids de résine polyester : 70 parties en poids de résine polyuréthanne.

3. Composition de revêtement selon la revendication 1 ou 2, **caractérisée en ce que** le composant (I) comporte en tant que liant
de 10 à 50 % en poids du mélange d'au moins un polyester (A1) et d'au moins une résine polyuréthanne (A2),
de 50 à 90 % en poids d'au moins une autre résine polyacrylate (A3) et/ou d'au moins une autre résine polyester acryloylée et/ou d'au moins une autre résine polyuréthanne acryloylée, et
de 0 à 10 % en poids d'au moins un autre polymère (A4),
la somme des parties en poids des composants étant dans chaque cas de 100 % en poids, et/ou le liant (A) présentant un indice de groupes OH allant de 50 à 200 mg de KOH/g.

4. Composition de revêtement selon l'une quelconque des revendications 1 à 3, **caractérisée en ce que** le copolymère d'acrylate (A3) peut être obtenu par polymérisation dans un solvant organique ou dans un mélange de solvants organiques, et en présence d'au moins un amorceur de polymérisation,
a1) d'un ester d'acide (méth)acrylique différent de (a2), (a3), (a4), (a5) et (a6), exempt de groupes acides, copolymérisable avec (a2), (a3), (a4), (a5) et (a6), ou d'un mélange de tels monomères,
a2) d'un monomère à insaturation éthylénique, différent de (a5), copolymérisable avec (a1), (a2), (a3), (a4), (a5) et (a6), qui porte au moins un groupe hydroxy par molécule et est exempt de groupes acides, ou d'un mélange de tels monomères,
a3) d'un monomère à insaturation éthylénique, copolymérisable avec (a1), (a2), (a4), (a5) et (a6), portant, par molécule, au moins un groupe acide, ou d'un mélange de tels monomères, et
a4) éventuellement d'un ou plusieurs esters vinyliques d'acides monocarboxyliques ramifiés en position alpha, ayant de 5 à 18 atomes de carbone par molécule, et/ou
a5) éventuellement d'au moins un produit de réaction d'acide acrylique et/ou d'acide méthacrylique avec l'ester glycidylique d'un acide monocarboxylique ayant de 5 à 18 atomes de carbone par molécule, ramifié en position alpha, ou, au lieu du produit de réaction, d'une quantité équivalente d'acide acrylique et/ou d'acide méthacrylique, qui est ensuite mis en réaction, pendant ou après la réaction de polymérisation, avec l'ester glycidylique d'un acide monocarboxylique ayant de 5 à 18 atomes de carbone par molécule, ramifié en position alpha,
a6) éventuellement d'un monomère à insaturation éthylénique, exempt de groupes acides, différent de (a1), (a2), (a4) et (a5), copolymérisable avec (a1), (a2), (a3), (a4) et (a5), ou d'un mélange de tels monomères,
(a1), (a2), (a3), (a4), (a5) et (a6) étant choisis en nature et en quantité de sorte que la résine polyacrylate (A3) présente l'indice de groupes OH, l'indice d'acide désirés, et la masse moléculaire désirée.

5. Composition de revêtement selon l'une quelconque des revendications 1 à 4, **caractérisée en ce que** la résine polyester (A1) peut être obtenue en faisant réagir
p1) des acides di- et/ou polycarboxyliques ou leurs dérivés aptes à l'estérification, éventuellement conjointement avec des acides monocarboxyliques,
p2) des diols,
p3) des polyols, éventuellement conjointement avec des monoalcools, et
p4) éventuellement d'autres composants modificateurs.

6. Composition de revêtement selon l'une quelconque des revendications 1 à 5, **caractérisée en ce que** la résine polyuréthanne (A2) peut être obtenue en utilisant des diisocyanates de formule générale (III) 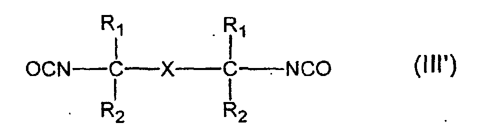 dans laquelle X représente un radical hydrocarboné aromatique divalent
et/ou en utilisant des diisocyanates de formule générale (IV') : 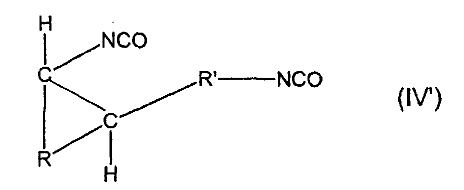 dans laquelle R représente un radical alkyle ou aralkyle divalent, ayant de 3 à 20 atomes de carbone, et R' représente un radical alkyle ou aralkyle divalent ayant de 1 à 20 atomes de carbone.

7. Composition de revêtement selon l'une quelconque des revendications 1 à 6, **caractérisée en ce que** les liants (A1) à (A4) et l'agent de réticulation (F1) sont utilisés en quantités telles que le rapport d'équivalents de groupes hydroxy des composants (A1) à (A4) du liant (A) aux groupes isocyanate de l'agent de réticulation (F1) est compris entre 1:2 et 2:1.

8. Utilisation des compositions de revêtement selon l'une quelconque des revendications 1 à 7, pour le revêtement de matières plastiques.

9. Utilisation des compositions de revêtement selon l'une quelconque des revendications 1 à 7, en tant que vernis ou peinture de finition, en particulier en tant que peinture de finition.
